# EUROPÄISCHE PATENTSCHRIFT

(11) **EP 2 392 819 B1**
(45) Veröffentlichungstag und Bekanntmachung des Hinweises auf die Patenterteilung: **03.04.2013**
(21) Anmeldenummer: 10005654.8
(22) Anmeldetag: 31.05.2010
(51) Int. Cl.: F03D 7/02, F15B 11/00

(54) **Vorrichtung zur elektrohydraulischen Drehverstellung der Rotorblätter am Rotor einer Windkraftanlage**
Device for an electrohydraulic adjustment of a pitch angle of rotor blades on a rotor of a wind turbine
Dispositif de réglage rotatif hydroélectrique des pales de rotor sur le rotor d'une éolienne

(43) Veröffentlichungstag der Anmeldung: 07.12.2011
(73) Patentinhaber: HAWE Hydraulik SE, 81673 München (DE)
(72) Erfinder: Nocker, Andreas, 86971 Peiting (DE)
(74) Vertreter: Grünecker, Kinkeldey, Stockmair & Schwanhäusser

(56) Entgegenhaltungen:
- EP-A1- 0 837 275
- EP-A1- 1 533 520
- EP-A1- 1 835 174
- EP-A2- 1 413 773
- WO-A1-2008/000882
- DE-U1-202004 003 749
- GB-A- 2 071 779
- JP-A- 62 297 502

## Beschreibung

Die Erfindung betrifft eine Vorrichtung der im Oberbegriff des Patentanspruchs 1 angegebenen Art.

Bei der aus EP 1 533 520 A bekannten, ausschließlich im Regenerativbetrieb arbeitenden Vorrichtung zur Drehverstellung nur jeweils eines Rotorblattes ist dem zwischen der Druckquelle und der kolbenseitigen Kammer des Differentialzylinders angeordneten 2/2-Wege-Proportionalsitzventil in einer die kolbenstangenseitige Kammer mit der kolbenseitigen Kammer verbindenden Regenerativleitung ein 2/2-Wege-Schwarz/Weiß-Sitzventil zugeordnet. Beide 2/2-Wege-Proportionalsitzventile sind stromlos absperrend ausgebildet, während das 2/2-Wege-Schwarz/Weiß-Sitzventil stromlos offen ausgebildet ist. Regenerativbetrieb bedeutet, dass im Differentialzylinder bei einer Verstellaktion verdrängtes hydraulisches Druckmittels zwischen den kolbenseitigen und kolbenstangenseitigen Kammern des Differentialzylinders verlagert wird. Dieses Betriebsprinzip ist für Rotoren erforderlich, deren mehrere Rotorblätter einzeln durch je einen Differentialzylinder drehverstellt werden. Die hierbei verwendete Magnet-Ventilanordnung ist nicht zu einer Drehverstellung im nicht-regenerativen Betrieb verwendbar.

Bei der aus EP 1 413 773 A bekannten elektrohydraulischen Proportional-Steuervorrichtung für einen Mastabschnitt einer Betonpumpe oder eines Krans sind insgesamt vier 2/2-Wege-Proportional-Sitzventile vorgesehen und so zwischen den beiden Seiten eines doppelt wirkenden Hydrozylinders verschaltet, dass alle vier 2/2-Wege-Proportional-Sitzventile unbestromt in ihren Durchgangsstellungen sind und jeweils in bestromten Zustand in eine leckagefreie Sperrstellung schalten.

Bei einer aus der Praxis bekannten Vorrichtung zum gleichzeitigen elektrohydraulischen Drehverstellen aller Rotorblätter am Rotor einer Windkraftanlage durch einen gemeinsam mit den Rotorblättern gekuppelten Differentialzylinder ist in der Magnet-Ventilkombination ein 4/3-Proportional-Wegeschieberventil vorgesehen, dem in den Arbeitsleitungen überkreuz aufsteuerbare Lasthalteventile sowie parallel ein 4/2-Wege-Magnetschaltventil sowie ein 2/2-Wege-Magnetschattventil jeweils in stromlos offener Ausbildung zugeordnet sind. Das Wegeschieberventil arbeitet funktionsbedingt mit Leckage, ist teuer, und bedingt aufwändige Hilfsventile, um im statischen Verstellzustand die erforderliche Leckagefreiheit zu gewährleisten. Die Magnet-Ventilkombination ist teuer und enthält unzweckmäßig viele Komponenten, die potentielle Störungsquellen darstellen.

Der Erfindung liegt die Aufgabe zugrunde, eine Vorrichtung der eingangs genannten Art, jedoch zur gleichzeitigen Verstellung aller Rotorblätter durch einen gemeinsamen Differentialzylinder anzugeben, deren Magnet-Ventilkombination einfach, betriebssicher und kostengünstig ist.

Die gestellte Aufgabe wird mit den Merkmalen des Patentanspruchs 1 gelöst.

Die Magnet-Ventilkombination aus den zwei 2/2-Wege-Proportionalsitzventilen und den beiden, jeweils einem 2/2-Wege-Proportionalsitzventil funktionell zugeordneten 2/2-Wege-Schwarz/Weiß-Sitzventilen enthält nur eine minimale Anzahl Komponenten und damit möglichst wenige potentielle Fehlerquellen, garantiert im statischen Verstellzustand absolute Leckagefreiheit aufgrund der Sitzventilbauweise, und ist vor allem wesentlich kostengünstiger als Magnet-Ventilkombinationen mit einem Wegeschieberventil. Die Magnet-Ventilkombination mit den im Wesentlichen nur vier Komponenten ist zur Steuerung aller in einer Windkraftanlage erforderlichen Verstellzustände verwendbar, wie z.B. für eine Notfallverstellung zum Drehverstellen der Rotorblätter in die Flag-Positionen zumindest bei Stromausfall, zum Drehverstellen der Rotorblätter in den Wind und aus dem Wind, und zum hydraulischen Blockieren des jeweiligen Rotorblätter-Verstellzustands in einer statischen Betriebskondition. Die 2/2-Wege-Proportionalsitzventile sind beispielsweise Typen, die aus EP 837 275 A bekannt sind, wobei die Gesamtoffenbarung dieser Publikation hiermit durch Rückbeziehung inkorporiert wird.

Bei einer zweckmäßigen Ausführungsform sind zwischen den zwei 2/2-Wege-Proportionalsitzventilen und der Druckquelle, einschließlich des Druckspeichers, jeweils in Richtung zur Druckquelle sperrende Rückschlagventile angeordnet. Diese sichern die leckagefreie Dichtheit in einem statischen Betriebszustand selbst über lange Zeiträume ohne Verstellaktionen. Diese Rückschlagventile können alternativ dann entfallen, wenn die beiden 2/2-Wege-Proportionalsitzventile in Absperrstellung in beiden Strömungsrichtungen leckagefrei dicht ausgebildet sind.

Zweckmäßig sind sämtliche Magnet-Ventile der Magnet-Ventilkombination jeweils mit einer hydraulischen Vorsteuerung ausgebildet. Dies ermöglicht geringe Schaltkräfte und somit kleinbauende und leistungsarme Proportionalmagneten bzw. Schwarz/Weiß-Magneten und trotzdem schnelle Schaltzeiten bei relativ hohen Betriebsdrücken und für relativ große Strömungsraten.

Zweckmäßig ist ferner der Druckspeicher ein Kolbendruckspeicher, der über lange Standzeiten funktionssicher ist und weitestgehend unabhängig von klimatischen Einflüssen arbeitet. Bei einem Betriebsdruck von etwa 180 bar kann eine Speicherkapazität von etwa 10 Liter Druckmittel ausreichen. Der Druckspeicher wird von der im Speicherladebetrieb betriebenen Pumpe stets auf Betriebsdruck gehalten und reicht mit seiner Speicherkapazität aus, zumindest einige Verstellzustände zu steuern, ohne die Pumpe einschalten zu müssen, zumindest einen Notfall-Verstellzustand mit Stromausfall, um die Rotorblätter aus dem Wind zu drehen, ohne die dann ohnedies ausgefallene Pumpe zu benötigen.

Bei einer weiteren, zweckmäßigen Ausführungsform sind, angeschlossen an eine übergeordnete elektronische Steuereinrichtung, dem Differentialzylinder zumindest ein Wegaufnehmer und in jeder Arbeitsleitung ein Druckmessumformer zugeordnet. Diese Zusatzausstattungen liefern der Steuereinrichtung die für die Betriebssicherheit erforderlichen Informationen und Rückmeldungen zu eingestellten oder sich ändernden Verstellzuständen, wobei die Steuereinrichtung gegebenenfalls auch noch Informationen von Meldern der Windstärke, -richtung und des Strombedarfs verarbeiten kann.

Der Differentialzylinder ist mit allen Rotorblättern gekuppelt und im Rotor der Windkraftanlage angeordnet, während die Magnet-Ventilkombination außerhalb des Rotors platziert werden kann, z.B. in der Gondel auf dem Turm der Windkraftanlage. Die Arbeitsleitungen verlaufen über eine Drehdurchführung zwischen dem Rotor und der Gondel zum Differentialzylinder. Es braucht somit nur das Druckmittel über die Drehdurchführung gefördert zu werden, und keine anderen Betriebsmedien, wie beispielsweise elektrische Signale, Versorgungsstrom, oder dgl..

Da bei einem Notfall-Betriebszustand, gegebenenfalls mit Stromausfall, sichergestellt sein muss, dass die Rotorblätter präventiv in die Flag-Positionen drehverstellt und gehalten werden, wobei aufgrund des Stromausfalls weder die Magnet-Ventilkombination noch die Pumpe aktivierbar sind, ist es zweckmäßig, wenn für diesen Betriebszustand das stromlos absperrend ausgebildete 2/2-Wege-Proportionalsitzventil und das stromlos offen ausgebildete 2/2-Wege-Schwarz/Weiß-Sitzventil der zu einer kolbenseitigen Kammer des Differentialzylinders führenden Arbeitsleitung zugeordnet sind. Aufgrund des Stromausfalls wird die kolbenseitige Kammer druckentlastet, so dass der Druckspeicher in der Lage ist, in der kolbenstangenseitigen Kammer genügend Druck und Druckkapazität bereitzustellen, um die Rotorblätter durch Einfahren des Differentialzylinders aus dem Wind zu verstellen, wofür aufgrund der gegenüber der kolbenseitigen Kammer kleineren kolbenstangenseitigen Kammer nur ein relativ kleines Druckmittelvolumen bewegt zu werden braucht, d.h., dass aufgrund der Verschaltung in der Magnet-Ventilkombination der Druckspeicher mit seiner Speicherkapazität nicht primär auf eine Leckagekompensation sondern nur auf den geschilderten Notfall-Betriebszustand ausgelegt zu werden braucht.

Anhand der Zeichnungen wird eine Ausführungsform des Erfindungsgegenstandes erläutert. Es zeigen:
- Fig. 1: ein Blockschaltbild einer Magnet-Ventilkombination einer Vorrichtung zur elektrohydraulischen Drehverstellung aller Rotorblätter am Rotor einer Windkraftanlage mittels eines einzigen Differentialzylinders, in drucklosem und stromlosem Zustand,
- Fig. 2: die Magnet-Ventilkombination bei einem Notfall-Betriebszustand mit Stromausfall, in unter Druck stehendem Zustand,
- Fig. 3: die Magnet-Ventilkombination in einem Verstellzustand zum Drehverstellen der Rotorblätter beispielsweise in den Wind (pitching in),
- Fig. 4: die Magnet-Ventilkombination in einem Verstellzustand zum Drehverstellen der Rotorblätter aus dem Wind (pitching out), und
- Fig. 5: die Magnet-Ventilkombination in einem statischen Verstellzustand, d.h. in einer hydraulischen blockierten, leckagefreien Kondition.

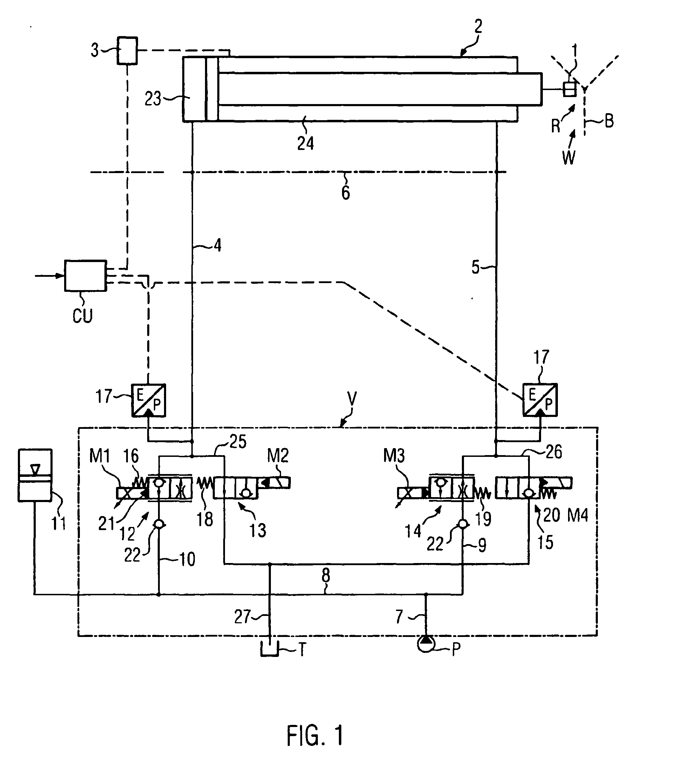

In Fig. 1 ist eine Windkraftanlage W nur symbolisch dargestellt. Die Windkraftanlage W weist wie üblich einen Turm mit einer darauf beispielsweise drehbaren Gondel auf, in welcher ein Rotor R mit mehreren Rotorblättern B, beispielsweise in der Regel drei Rotorblättern, drehbar gelagert ist, wobei der Rotor einen nicht gezeigten Generator treibt.

Von der Erfindung betroffene Windkraftanlagen sind im Regelfall sogenannte stand-alone-Anlagen, die beispielsweise auf landwirtschaftlichen Betrieben zur Eigenversorgung eingesetzt werden und nicht notwendigerweise in das Stromnetz einspeisen. Es können dies Windkraftanlagen mit einer maximalen Leistung von etwa 1 Megawatt sein, wobei die Rotorblätter B dennoch z.B. etwa 30 m lang sind. Die Rotorblätter B können beispielsweise über eine Art Getriebe 1 mittels eines einzigen Differentialzylinders 2 drehverstellt und in den jeweiligen Dreheinstellungen hydraulisch blockiert werden, wobei sich der Differentialzylinder 2, zweckmäßig, im Rotor R befindet und mit diesem mitdreht, während sich eine zugehörige Magnet-Ventilanordnung V einer Vorrichtung zum elektrohydraulischen Drehverstellen der Rotorblätter B beispielsweise in der Gondel befindet.

Der Vorrichtung ist eine elektronische, übergeordnete Steuereinheit CU zugeordnet, die beispielsweise Informationen von einem Wegaufnehmer 3 des Differentialzylinders 2 und von Druckmessumformern 17 in zwei Arbeitsleitungen 4, 5 des Differentialzylinders 2 erhält. Die Arbeitsleitungen 4, 5 sind beispielsweise über eine Drehdurchführung 6 zwischen der Gondel und dem Rotor in den Rotor R zum Differentialzylinder 2 installiert.

In der Magnet-Ventilanordnung V ist in jeder Arbeitsleitung 4, 5 ein 2/2-Wege-Proportionalsitzventil 12, 14 angeordnet, das über eine Druckleitung 7, 8 und Druckleitungszweige 9, 10 an eine auch im Speicherladebetrieb betreibbare Pumpe P und einen Druckspeicher 11 angeschlossen ist. Das 2/2-Wege-Proportionalsitzventil 12 ist in der zu einer kolbenseitigen Kammer 23 des Differentialzylinders 2 führenden Arbeitsleitung 4 angeordnet, während das andere 2/2-Wege-Proportionalsitzventil 14 parallel in der Arbeitsleitung 5 zu einer kolbenstangenseitigen Kammer 24 angeordnet ist. Das 2/2-Wege-Proportionalsitzventil 12 ist durch einen Proportionalmagneten M1 gegen eine Feder 16 betätigbar, weist eine hydraulische Vorsteuerung 21 auf, und ist stromlos absperrend ausgebildet (Absperrstellung in Fig. 1). In der Absperrstellung herrscht leckagefreie Dichtheit zumindest in Strömungsrichtung zum Differentialzylinder 2. Aus Gründen der Leckagefreiheit in einem statischen Verstellzustand ist im Druckleitungszweig 10 ein zur Druckquelle P und zum Druckspeicher 11 sperrendes Rückschlagventil 22 angeordnet ist. Das andere 2/2-Wege-Proportionalsitzventil 14 ist durch einen Proportionalmagneten M3 und eine Feder 19 betätigbar und stromlos offen ausgebildet (Fig. 1). Von den Arbeitsleitungen 4, 5 zweigen zwischen dem Differentialzylinder 2 und den 2/2-Wege-Proportionalsitzventilen 12, 14 jeweils die 2/2-Wege-Proportionalsitzventile 12, 14 umgehende Ablaufleitungen 25, 26 zu einer Tankleitung 27 ab. In jeder Ablaufleitung 25, 26 ist ein 2/2-Wege-Schwarz/Weiß-Sitzventil 13 bzw. 15 angeordnet, wobei das dem Ventil 12 zugeordnete Ventil 13 durch einen Schwarz/Weiß-Magneten M2 und eine Feder 18 betätigbar und stromlos offen (Fig. 1) ausgebildet ist, während das andere 2/2-Wege-Schwarz/Weiß-Sitzventil 15 durch einen Schwarz/Weiß-Magneten M4 und eine Feder 20 betätigbar und stromlos absperrend ausgebildet ist. Beide 2/2-Wege-Schwarz/Weiß-Sitzventile 13, 15 sind mit in Strömungsrichtung zumindest zum Reservoir T leckagefreier Absperrstellung ausgebildet. Im Druckleitungszweig 9 ist ebenfalls ein in Richtung zur Pumpe P und zum Druckspeicher 11 sperrendes Rückschlagventil 22 angeordnet. Alternativ könnten beide 2/2-Wege-Proportionalsitzventile 12, 14 mit in beiden Strömungsrichtungen leckagefreie dichter Absperrstellung ausgebildet sein. Dann könnten die Rückschlagventile 22 entfallen.

In der gezeigten Ausführungsform wird davon ausgegangen, dass die Rotorblätter B durch Einfahren des Differentialzylinders 2 (Druckbeaufschlagen der kolbenstangenseitigen Kammer 24, Druckentlasten der kolbenseitigen Kammer 23) aus dem Wind verstellt werden, zweckmäßig bis in eine sogenannte neutrale Flag-Position. Diese Auslegung bietet den Vorteil, das gegenüber der kolbenseitigen Kammer kleinere Volumen bzw. die kleinere kreisringförmige Druckbeaufschlagungsfläche des Kolbens nutzen zu können, und somit für diesen Verstellvorgang nur eine kleine Druckmittelmenge bewegen zu müssen, die gegebenenfalls allein aus der Speicherkapazität des Druckspeichers 11 gedeckt wird. Der Druckspeicher ist zweckmäßig ein sogenannter Kolbendruckspeicher mit einer Speicherkapazität von etwa 10 Liter bei einem Betriebsdruck von etwa 180 bar und wird über die im Speicherladebetrieb betreibbare Pumpe P auf den Betriebsdruck aufgeladen bzw. gehalten.

In der Magnet-Ventilkombination V ist somit dem für die Arbeitsleitung 4 zuständigen 2/2-Wege-Proportionalsitzventil 12 mit in stromlosem Zustand eingestellter Absperrstellung das in stromlosem Zustand offene 2/2-Wege-Schwarz/Weiß-Sitzventil 13 zugeordnet, während dem für die Arbeitsleitung 5 verantwortlichen 2/2-Wege-Proportionalsitzventil 14, das in stromlosem Zustand seines Proportionalmagneten M3 offen ist, das in stromlosem Zustand in der Absperrstellung befindliche 2/2-Wege-Schwarz/Weiß-Sitzventil 15 zugeordnet ist.

Wird bei einer alternativen Ausführungsform die Verstellung der Rotorblätter beispielsweise in die Flag-Position durch Ausfahren des Differentialzylinders 2 eingestellt, dann kann die paarweise Anordnung der Sitzventile gegenüber der in Fig. 1 gezeigten vertauscht sein.

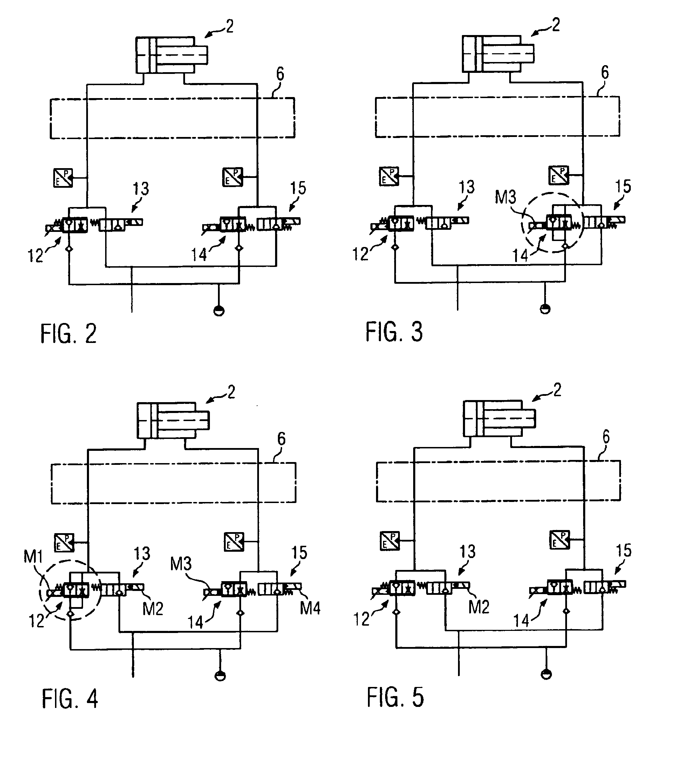

Anhand der Fig. 2 bis 5 werden vier für eine solche Windkraftanlage W vorgeschriebene Verstellzustände erläutert.

Fig. 2 zeigt den Verstellzustand in einem Notfall, beispielsweise mit Stromausfall, in welchem die Rotorblätter B in die Flag-Position gebracht, d.h. vollständig aus dem Wind genommen werden. Dieser Verstellzustand muss, da er auch bei einem Stromausfall zuverlässig ablaufen muss, ohne Stromversorgung der Magnet-Ventilanordnung, der Pumpe und der Steuereinheit CU funktionieren. Dies wird durch die erfindungsgemäß vorgesehene Verschaltung in der Magnet-Ventilanordnung V erzielt. Dieser Notfall-Verstellzustand entspricht im Grunde genommen der in Fig. 1 gezeigten Stellung der Komponenten, wobei das System in Fig. 2 zumindest unter dem Betriebsdruck des Druckspeichers 11, z.B. 180 bar, steht. Da das 2/2-Wege-Proportionalsitzventil 14 stromlos offen ausgebildet ist, wird der Druck aus dem Druckspeicher 11 ohne Zuhilfenahme der Pumpe P in die kolbenstangenseitige Kammer 24 des Differentialzylinders übertragen. Das 2/2-Wege-Schwarz/Weiß-Sitzventil 15 ist in seiner leckagefreien Absperrstellung und verhindert den Druckabbau zum Reservoir T. Da auch das 2/2-Wege-Proportionalsitzventil 12 in stromlosem Zustand in seiner leckagefreien Absperrstellung, zumindest in Strömungsrichtung zum Differentialzylinder 2, ist, wird der Druck aus dem Druckspeicher 11 nicht in die kolbenseitige Kammer 23 übertragen, sondern der Druck in der kolbenseitigen Kammer 23 baut sich über das in stromlosem Zustand offene 2/2-Wege-Schwarz/Weiß-Sitzventil 13 und die Ablaufleitung 26 in das Reservoir T ab. Der Differentialzylinder 2 fährt, gegebenenfalls bis auf Anschlag, ein und nimmt die Rotorblätter B aus dem Wind.

Fig. 3 verdeutlicht einen Verstellzustand, bei dem die Rotorblätter B beispielsweise in den Wind gestellt werden (pitching in). Der Proportionalmagnet M1 ist wie der Schwarz/Weiß-Magnet M2 stromlos. Diese beiden Ventile 12, 13 stehen in den Stellungen entsprechend Fig. 1, so dass die kolbenseitige Kammer 23 über die Ablaufleitung 25 zum Reservoir T entlastet wird. Auch der Schwarz/Weiß-Magnet M4 ist unbestromt, so dass die Ablaufleitung 26 aus der kolbenstangenseitigen Kammer 24 leckagefrei abgesperrt ist. Der Proportionalmagnet M3 ist bestromt, um den Differentialzylinder 2 mit einer der Stromstärke der Bestromung entsprechenden Geschwindigkeit durch Druckbeaufschlagung in der Arbeitsleitung 5 bis in eine durch die Steuerung CU vorbestimmte Position einzufahren, gegebenenfalls unter Zuschalten der Pumpe P. Sobald die vorgewählte Drehposition der Rotorblätter B erreicht ist, wird die Verstellung des Differentialzylinders 2 hydraulisch blockiert, beispielsweise indem der Verstellzustand gemäß Fig. 5 eingestellt wird.

Fig. 4 verdeutlicht den Verstellzustand, bei welchem die Rotorblätter B aus dem Wind verdreht werden (pitching out), und zwar beispielsweise bis in eine von der Steuerung CU vorgegebene bzw. errechnete Sollposition, in der die Rotorblätter dann wie in Fig. 5 gezeigt hydraulisch blockiert werden (statischer Verstellzustand). In Fig. 4 ist der Proportionalmagnet M1 bestromt, so dass über das dann öffnende Rückschlagventil 22 und das 2/2-Wege-Proportionalsitzventil 12 Druckmittel in einer durch die Bestromung gewählten Menge in die kolbenseitige Kammer 23 strömt. Gleichzeitig ist auch der Schwarz/Weiß-Magnet M2 bestromt, so dass das 2/2-Wege-Schwarz/Weiß-Sitzventil 13 seine leckagefreie Absperrstellung einnimmt und die Ablaufleitung 25 blockiert. Zur gleichen Zeit sind auch der Proportionalmagnet M3 und der Schwarz/Weiß-Magnet M4 bestromt, so dass das 2/2-Wege-Proportionalsitzventil 14 seine Absperrstellung einnimmt und das 2/2-Wege-Schwarz/Weiß-Sitzventil 15 seine offene Stellung gegen die Feder 20 einnimmt und die Ablaufleitung 26 zum Reservoir T öffnet. Die Bewegungsgeschwindigkeit des Kolbens des Differentialzylinders 2 wird durch die Bestromung des Proportionalmagneten M1 eingestellt, und auch geregelt, da die beiden 2/2-Wege-Proportionalsitzventile 12, 14, vorzugsweise, als Druckregelventile ausgebildet sind, wie durch die parallelen Linien neben der Symboldarstellung in den Figuren angedeutet wird.

In Fig. 4 kann im Übrigen die Pumpe P miteingeschaltet werden, wofür gegebenenfalls auch die Steuerung CU sorgt, die beispielsweise den Betriebsdruck im Druckspeicher 11 überwacht, wenn der Betriebsdruck um ein vorbestimmtes Maß abfallen sollte. Ferner kann in Fig. 4 der Proportionalmagnet M3 gegebenenfalls so stark bestromt werden, dass das 2/2-Wege-Proportionalsitzventil 14 nicht druckregelnd arbeitet, sondern seine leckagefreie Absperrstellung einnimmt.

In Fig. 5 wird ein statischer Verstellzustand gezeigt, in welchem beispielsweise der Differentialzylinder 2 hydraulisch blockiert wird, und zwar entweder in einer Endstellung (volles pitching in oder volles pitching out) oder in jeder Drehposition der Rotorblätter, die zum Einhalten einer bestimmten Drehzahl des Rotors R oder dgl. erforderlich ist). In Fig. 5 ist nur der Schwarz/Weiß-Magnet M2 des 2/2-Wege-Schwarz/Weiß-Sitzventils 13 bestromt, damit dieses seine Absperrstellung einnimmt und die Ablaufleitung 25 zum Reservoir 27 sperrt, so dass aufgrund der beiden Rückschlagventile 22 und des stromlos ebenfalls in der Absperrstellung stehenden 2/2-Wege-Schwarz/Weiß-Sitzventils 15 beide Arbeitsleitungen 4, 5 und beide Ablaufleitungen 25, 26 leckagefrei blockiert sind. Dieser statische Verstellzustand kann über lange Zeit gehalten werden. Sollte dennoch, beispielsweise über die Drehdurchführung 6 Leckage auftreten, die zu der Tendenz einer Verstellung des Kolbens des Differentialzylinders 2 führen kann, so wird dies über den Wegaufnehmer 3 der Steuerung CU gemeldet, die dann nach Bedarf Druck entweder in die Arbeitsleitung 4 oder 5 oder in beide Arbeitsleitungen nachspeist, um den statischen Zustand aufrechtzuhalten.

## Patentansprüche

1. Vorrichtung zur elektrohydraulischen Drehverstellung der Rotorblätter (B) am Rotor (R) einer Windkraftanlage (W), mit einer Magnet-Ventilkombination (V) und wenigstens einem Druckspeicher (11) zur Steuerung mehrerer Verstellzustände, wobei die Magnet-Ventilkombination (V) zwischen einer Pumpe (P) für Speicherladebetrieb mit parallelem Reservoir (T) und einem mit wenigstens einem Rotorblatt (B) gekuppelten Differentialzylinder (2) zwei 2/2-Wege-Proportionalsitzventile (12, 14) und zumindest ein 2/2-Wege-Schwarz/Weiß-Sitzventil (13, 15), jeweils mit leckagefrei dichter Absperrstellung, umfasst, **dadurch gekennzeichnet, dass** ein einziger Differentialzylinder (2) mit allen Rotorblättern (B) eines Rotors (R) der Windkraftanlage (W) gekuppelt ist, dass jedes 2/2-Wege-Proportionalsitzventil (12, 14) zwischen einer von zwei Arbeitsleitungen (4, 5) des Differentialzylinders (2) und der Druckquelle (P) angeordnet ist, dass von den 2/2-Wege-Proportionalsitzventilen (12, 14) eines (14) stromlos offen und das andere (12) stromlos absperrend ausgebildet ist, dass in von den Arbeitsleitungen (4, 5) zwischen dem Differentialzylinder (2) und den 2/2-Wege-Proportionalsitzventilen (12, 14) zum Reservoir (T) abzweigenden Ablaufleitungen (25, 26) jeweils ein funktionell einem 2/2-Wege-Proportionalsitzventil (12, 14) zugeordnetes 2/2-Wege-Schwarz/Weiß-Sitzventil (13, 15) angeordnet ist, das in der Absperrstellung zumindest in Strömungsrichtung zum Reservoir (T) leckagefrei dicht ist, und dass das dem stromlos offen ausgebildeten 2/2-Wege-Proportionalventil (14) zugeordnete 2/2-Wege-Schwarz/Weiß-Sitzventil (13) stromlos absperrend und das dem stromlos absperrend ausgebildeten 2/2-Wege-Proportionalsitzventil (12) zugeordnete 2/2-Wege-Schwarz/Weiß-Sitzventil (15) stromlos offen ausgebildet ist.

2. Vorrichtung nach Anspruch 1, **dadurch gekennzeichnet, dass** zwischen den zwei 2/2-Wege-Proportionalsitzventilen (12, 14) und der Druckquelle (P), einschließlich des Druckspeichers (11), je ein in Richtung zur Druckquelle (P) sperrendes Rückschlagventil (22) angeordnet ist.

3. Vorrichtung nach Anspruch 1, **dadurch gekennzeichnet, dass** die 2/2-Wege-Proportionalsitzventile (12, 14) und die 212-Wege-SchwarzNVeiß-Sitzventile (13, 15) jeweils eine hydraulische Vorsteuerung (21) aufweisen.

4. Vorrichtung nach Anspruch 1, **dadurch gekennzeichnet, dass** der Druckspeicher (11)ein Kolbendruckspeicher, vorzugsweise mit einer Speicherkapazität von etwa 10 Liter bei 180 bar Betriebsdruck, ist.

5. Vorrichtung nach wenigstens einem der vorhergehenden Ansprüche, **dadurch gekennzeichnet, dass**, angeschlossen an eine übergeordnete elektronische Steuereinrichtung (CU), dem Differentialzylinder (2) ein Wegaufnehmer (3) und in jeder Arbeitsleitung (4, 5) ein Druckmessumformer (17) zugeordnet sind.

6. Vorrichtung nach wenigstens einem der vorhergehenden Ansprüche, **dadurch gekennzeichnet, dass** der Differentialzylinder (2) im Rotor (R) der Windkraftanlage (W) und die Magnet-Ventilkombination (V) außerhalb des Rotors (R) angeordnet sind, und dass die Arbeitsleitungen (4, 5) über eine Drehdurchführung (6) in den Rotor (R) und zum Differentialzylinder (2) verlaufen.

7. Vorrichtung nach Anspruch 1, **dadurch gekennzeichnet, dass** für einen Notfall-Verstellzustand zumindest mit Stromausfall zum Einfahren des Differentialzylinders (2) das stromlos absperrend ausgebildete 2/2-Wege-Proportionalsitzventil (12) und das stromlos offen ausgebildete 2/2-Wege-Schwarz/Weiß-Sitzventil (13) der zu einer kolbenseitigen Kammer (23) des Differentialzylinders (2) führenden Arbeitsleitung (4) zugeordnet sind.

## Claims

1. Device for an electro-hydraulic adjustment of a pitch angle of rotor blades (B) on a rotor (R) of a wind power plant (W), comprising a solenoid valve combination (V) and at least one pressure accumulator (11) for controlling a plurality of adjustment conditions, the solenoid valve combination (V) comprising two 2/2-multi-way proportional seat valves (12, 14) and at least one 2/2-multi-way black/white seat valve (13, 15), respectively operating with a leakage-free blocking position between a pump (P) and a parallel reservoir (T) operable for a pressure accumulator loading operation and a differential cylinder (2) coupled with at least one rotor blade (B), **characterised in that** a single differential cylinder (2) is coupled with all rotor blades (B) of the rotor (R) of the wind power plant (W), that each 2/2-multi-way proportional seat valve (12) is arranged between one of two working lines (4, 5) of the differential cylinder (2) and the pressure source (P), that among the 2/2-multi-way proportional seat valves (12, 14) one (14) is operable to be open in absence of electric current and the other (12) is operable to be blocking in absence of current, that in discharge lines (25, 26) branching off from the working lines (4, 5) between the differential cylinder (2) and the 2/2-multi-way proportional seat valves (12, 14) to the reservoir (T) respectively a 2/2-multi-way black/white seat valve (13, 15) is arranged and respectively associated functionally to one 2/2-multi-way proportional seat valve (12, 14), which 2/2-multi-way black/white seat valve (13, 15) in its leakage-free blocking position is blocking at least in flow direction to the reservoir (T), and that the 2/2-multi-way black/white seat valve (13) associated to the 2/2-multi-way proportional valve (14) operable to be open in absence of current is operable to block in absence of current, and the 2/2-multi-way black/white seat valve (15) associated to the 2/2-multi-way proportional seat valve (12) is operable to block in absence of current is operable to be open in absence of current.

2. Device according to claim 1, **characterised in that** the respective check valve (22) blocking in flow direction to the pressure sources (P) is arranged between the two 2/2-multi-way proportional seat valves (12, 14) and the pressure source (P) including the pressure accumulator (11).

3. Device according to claim 1, **characterised in that** 2/2-multi-way proportional seat valves (12, 14) and the 2/2-multi-way black/white seat valves (13, 15) respectively have a hydraulic pilot control (21).

4. Device according to claim 1, **characterised in that** the pressure accumulator (11) is a piston pressure accumulator, preferably having a storing capacity of about 10 litres at an operation pressure of 180 bars.

5. Device according to at least one of the preceding claims, **characterised in that** in each working line (4, 5) a stroke pick-up device (3) and a pressure measuring convertor (17) are associated to the differential cylinder (2) and are connected with a superimposed electronic control device (CU).

6. Device according to at least one of the preceding claims, **characterised in that** the differential cylinder (2) is arranged within the rotor (R) of the wind power plant (W) and the solenoid valve combination (V) is arranged outside of the rotor (R), and that the working lines (4, 5) extend through a rotary connection (6) into the rotor (R) and to the differential cylinder (2).

7. Device according to claim 1, **characterised in that** for an emergency case adjustment condition at least with an electrical power breakdown and in order to retract the differential cylinder (2) the 2/2-multi-way proportional seat valve (12) operable to block in absence of current and the 2/2-multi-way black/white seat valve (13) operable to be open in absence of current are associated to the working line (4) extending into a piston side chamber (23) of the differential cylinder.

## Revendications

1. Dispositif de réglage de rotation électro-hydraulique des pales de rotor (B) sur le rotor (R) d'une éolienne (W), comprenant une combinaison d'électrovannes (V) et au moins un accumulateur de pression (11) pour le contrôle de plusieurs états de réglage, la combinaison d'électrovannes (V) comportant, entre une pompe (P) pour le mode de chargement de l'accumulateur, avec un réservoir (T) parallèle, et un cylindre différentiel (2) couplé à au moins une pale de rotor (B), deux vannes à siège proportionnelles à 2/2 voies (12, 14) et au moins une vanne à siège tout ou rien à 2/2 voies (13, 15), chacune avec position d'arrêt étanche sans fuite, **caractérisé en ce qu'**un cylindre différentiel unique (2) est couplé à toutes les pales de rotor (B) d'un rotor (R) de l'éolienne (W), que chaque vanne à siège proportionnelle à 2/2 voies (12, 14) est disposée entre l'une de deux conduites de travail (4, 5) du cylindre différentiel (2) et la source de pression (P), que, sur les vannes à siège proportionnelles à 2/2 voies (12, 14), l'une (14) est agencée en position d'ouverture hors tension et l'autre (12) en position de fermeture hors tension, qu'une vanne à siège tout ou rien à 2/2 voies (13, 15), associée fonctionnellement à une vanne à siège proportionnelle à 2/2 voies (12, 14), est respectivement disposée dans des conduites de décharge (25, 26) en dérivation des conduites de travail (4, 5), entre le cylindre différentiel (2) et les vannes à siège proportionnelles à 2/2 voies (12, 14), vers le réservoir (T), laquelle vanne tout ou rien est étanche sans fuite dans la position d'arrêt au moins dans la direction d'écoulement vers le réservoir (T), et que la vanne à siège tout ou rien à 2/2 voies (13), associée à la vanne proportionnelle à 2/2 voies (14) agencée en position d'ouverture hors tension, est agencée en position de fermeture hors tension et la vanne à siège tout ou rien à 2/2 voies (15), associée à la vanne à siège proportionnelle à 2/2 voies (12) agencée en position de fermeture hors tension, est agencée en position d'ouverture hors tension.

2. Dispositif selon la revendication 1, **caractérisé en ce qu'**une vanne anti-retour (22), fermant en direction de la source de pression (P), est respectivement disposée entre les deux vannes à siège proportionnelles à 2/2 voies (12, 14) et la source de pression (P), y compris l'accumulateur de pression (11).

3. Dispositif selon la revendication 1, **caractérisé en ce que** les vannes à siège proportionnelles à 2/2 voies (12, 14) et les vannes à siège tout ou rien à 2/2 voies (13, 15) présentent respectivement une commande pilote hydraulique (21).

4. Dispositif selon la revendication 1, **caractérisé en ce que** l'accumulateur de pression (11) est un accumulateur de pression à piston, de préférence avec une capacité d'accumulation d'environ 10 litres sous une pression de service de 180 bars.

5. Dispositif selon l'une au moins des revendications précédentes, **caractérisé en ce que**, raccordés à une unité de commande électronique prioritaire (CU), un capteur de déplacement (3) et, dans chaque conduite de travail (4, 5), un transducteur de pression (17) sont associés au cylindre différentiel (2).

6. Dispositif selon l'une au moins des revendications précédentes, **caractérisé en ce que** le cylindre différentiel (2) est disposé dans le rotor (R) de l'éolienne (W) et la combinaison d'électrovannes (V) est disposée à l'extérieur du rotor (R), et que les conduites de travail (4, 5) s'étendent par l'intermédiaire d'un passage tournant (6) dans le rotor (R) et vers le cylindre différentiel (2).

7. Dispositif selon la revendication 1, **caractérisé en ce que**, pour un état de réglage d'urgence au moins avec panne de courant pour la rentrée du cylindre différentiel (2), la vanne à siège proportionnelle à 2/2 voies (12), agencée en position de fermeture hors tension, et la vanne à siège tout ou rien à 2/2 voies (13), agencée en position d'ouverture hors tension, sont associées à une conduite de travail (4) menant vers un compartiment (23) du côté piston du cylindre différentiel (2).
